(19) Europäisches Patentamt
European Patent Office
Office européen des brevets

(11) EP 4 527 486 A1

(12) **EUROPEAN PATENT APPLICATION**
published in accordance with Art. 153(4) EPC

(43) Date of publication:
**26.03.2025 Bulletin 2025/13**

(21) Application number: **23755318.5**

(22) Date of filing: **24.03.2023**

(51) International Patent Classification (IPC):
***B01D 53/62*** *(2006.01)* ***B01D 53/78*** *(2006.01)*

(52) Cooperative Patent Classification (CPC):
**B01D 53/1475; B01D 53/1406; B01D 53/1493; B01D 53/18; B01D 53/62; B01D 53/75; B01D 53/78; B01D 53/96;** B01D 2251/206; B01D 2251/2062; B01D 2258/0283; Y02C 20/40

(86) International application number:
**PCT/CN2023/083689**

(87) International publication number:
**WO 2023/221646 (23.11.2023 Gazette 2023/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.05.2022 CN 202210553874**

(71) Applicant: **Jiangnan Environmental Technology Inc**
**Ridgefield Park, NJ 07660 (US)**

(72) Inventors:
- **ZHANG, Jun**
  **Nanjing, Jiangsu 211100 (CN)**
- **QI, Lifang**
  **Nanjing, Jiangsu 211100 (CN)**
- **WANG, Jinyong**
  **Nanjing, Jiangsu 211100 (CN)**
- **LUO, Jing**
  **Nanjing, Jiangsu 211100 (CN)**

(74) Representative: **Bottero, Carlo**
**Barzanò & Zanardo S.p.A.**
**Via Borgonuovo, 10**
**20121 Milano (IT)**

# (54) GRADED ABSORPTION AMMONIA METHOD-BASED DECARBURIZATION APPARATUS AND METHOD

(57) Staged absorption ammonia-based decarbonization using an absorption circulating liquid containing ammonium salts to remove carbon dioxide in a gas, and control ammonia escape while realizing efficient decarbonization through staged solution composition control and reaction condition control. Staged solution composition control may include concentration gradient control of ammonium carbonate, ammonium bicarbonate, ammonium carbamate, ammonia, or combinations thereof, which may be characterized by the molar ratio of total ammonia to total $CO_2$. Reaction condition control may include temperature control, pH control, and pressure control. The flue gas may enter the decarbonization tower, and through staged absorption, establishment of concentration, temperature, and multi-point addition of ammonia, decarbonization efficiency may be improved, decarbonization operating costs may be saved, and ammonia escape may be controlled.

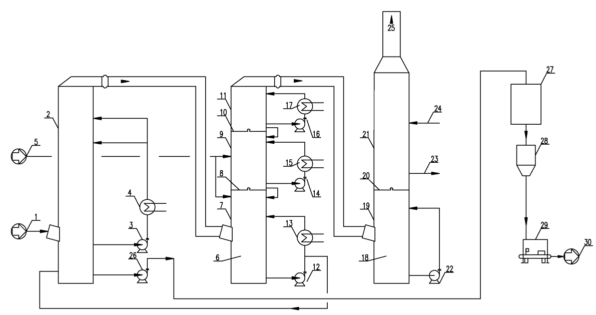
Fig. 1

EP 4 527 486 A1

## Description

CROSS-REFERENCE

This application claims the benefit of Chinese Patent Application No. CN202210553874.4, filed May 19, 2022, which is hereby incorporated by reference herein in its entirety.

TECHNICAL FIELD

The present invention belongs to the technical field of environmental protection, and in particular relates to a device and method for staged absorption ammonia-based decarbonization.

BACKGROUND

Climate warming is a problem that affects the development of the entire human being. $CO_2$ is the main contributor to climate warming. The industrial gas produced by the production activities of the chemical industry contains a large amount of $CO_2$.

The chemical absorption method using ammonia as the absorption liquid has the characteristics of strong absorption capacity, low corrosion, low regeneration energy consumption, low replenishing cost, uneasy degradation by other components in the flue gas, and simultaneous removal of a variety of acidic gas pollutants, etc. A lot of research has been done on it by domestic and foreign scholars.

Patent application publication CN108144428A proposes a process of sectional control and multi-point addition of ammonia, which is mainly divided into a pre-washing section, an absorption section, and a fine particle control section, each of which is provided with a number of spray layers. The pre-washing section cools the flue gas while concentrating the circulating washing liquid in the pre-washing section, and the absorption section absorbs and removes sulfur dioxide in the flue gas. The escape of ammonia and the generation of aerosols in each section are controlled. Likewise, this method also lacks emissions control for the removal of $CO_2$ from industrial gases.

Patent CN101524621B provides a flue gas decarbonization system with staged absorption and regeneration, which is composed of an absorption system, a regeneration system and a heat exchange system, and has lower energy consumption than traditional technologies. However, this system is applicable to systems with ethanolamine as the desulfurizer, where energy saving effect is achieved by controlling the multi-stage regeneration liquid return and absorption system.

Patent application CN200880122376.2 discloses a multi-stage $CO_2$ removal system and method for treating flue gas flow, where an absorber vessel is used, the flue gas flow is brought into contact with an ionic solution containing ammonia at a low temperature of 0-20°C, while the solution in the first absorption stage has a higher temperature and lower ammonia-to-carbon ratio than the solution in the third absorption stage. Ammonia escape can be reduced by controlling at low temperature, and having a lower temperature in the third stage, but a higher ammonia-to-carbon ratio in the third stage increases ammonia escape. This process has low decarbonization efficiency, high energy consumption, and serious ammonia escape.

BRIEF DESCRIPTION OF THE DRAWINGS

FIG. 1 shows illustrative apparatus in accordance with the principles of the invention.

Process gas 1, ammonium bicarbonate generating zone 2, ammonium bicarbonate generating zone circulating pump 3, ammonium bicarbonate generating zone heat exchanger 4, ammonia 5, decarbonization absorption zone 6, first-stage decarbonization absorption zone 7, liquid collector 8, second-stage decarbonization absorption zone 9, liquid collector 10, third-stage decarbonization absorption zone 11, first-stage decarbonization absorption zone circulating pump 12, first-stage decarbonization absorption zone heat exchanger 13, second-stage decarbonization absorption zone circulating pump 14, second-stage decarbonization absorption zone heat exchanger 15, third-stage decarbonization absorption zone circulating pump 16, third-stage decarbonization absorption zone heat exchanger 17, ammonia escape control system 18, ammonia escape control system water washing zone 19, liquid collector 20, ammonia escape control system acid washing zone 21, ammonia escape control system water washing zone circulating pump 22, desulfurization circulating liquid return 23, circulating liquid 24 from ammonia-based desulfurization system, flue gas discharge 25, ammonium bicarbonate discharge pump 26, crystallizer 27, solid-liquid separation equipment 28, packaging machine 29, and solid ammonium bicarbonate 30.

DETAILED DESCRIPTION

Provided is a method for staged absorption ammonia-based decarbonization, which uses an absorption circulating liquid containing ammonium salts to remove carbon dioxide in gas, and controls ammonia escape while realizing efficient decarbonization through staged solution composition control and reaction condition control.

At 10-30°C and one atmospheric pressure, $CO_2$ and ammonia react to produce ammonium carbamate and ammonium carbonate as the main products, and this reaction is a reversible reaction.

Overall chemical reaction formula:

$$CO_2 + NH_3 + H_2O \rightleftharpoons NH_4HCO_3$$

In the actual reaction process, there are many intermediate reactions. The general process is as follows:

$$CO_2 + 2NH_3 \rightleftharpoons NH_2COONH_4$$

Ammonium carbamate hydrolysis:

$$NH_2COONH_4 + H_2O \rightleftharpoons NH_4HCO_3 + NH_3$$

Reaction between $NH_3$ and $H_2O$:

$$NH_3 + H_2O \rightleftharpoons NH_4OH$$

Ammonium bicarbonate produced by hydrolysis reacts with ammonia to generate ammonium carbonate:

$$NH_4HCO_3 + NH_4OH \rightleftharpoons (NH_4)_2\,CO_3 + H_2O$$

Ammonium carbonate absorbs carbon dioxide to form ammonium bicarbonate:

$$(NH_4)_2\,CO_3 + H_2O + CO_2 \rightleftharpoons 2NH_4HCO_3$$

It can be seen from the above reactions that there are various complex chemical reactions between carbon dioxide and ammonia, and most of them are reversible reactions, and the solution composition is complex. To improve the efficiency of reaction between $CO_2$ and ammonia while reducing ammonia escape requires reasonable staged solution composition control and reaction condition control.

Staged solution composition control may include concentration gradient control of ammonium carbonate, ammonium bicarbonate, ammonium carbamate, ammonia, or combinations thereof, which may be characterized by the molar ratio of total ammonia to total $CO_2$.

Reaction condition control may include temperature control, pH control, and pressure control.

The cooled flue gas may be sequentially contacted with ammonium bicarbonate generating liquid and decarbonization absorption liquid to realize the synergistic control of ammonium bicarbonate generation, ammonium bicarbonate crystallization, carbon dioxide absorption, and ammonia escape, wherein:

the ammonium bicarbonate generating liquid may be provided with at least one stage of gas-liquid contact, the molar ratio of total ammonia to total $CO_2$ in the solution may be in the range 1-3, preferably 1-2; the total ammonia may include ammonia and ammonium radicals; and the total $CO_2$ may include free $CO_2$ and carbonized $CO_2$; and

the decarbonization absorption circulating liquid may be provided with at least two stages of gas-liquid contact, and the molar ratio of total ammonia to total $CO_2$ in the first-stage solution may be in the range 1.2-4, preferably 1.4-3.5, more preferably 1.6-3, and most preferably 1.8-2.5. The molar ratio of total ammonia to total $CO_2$ in the solutions between

the first stage and the final stage may be in the range 1.5-4.5, preferably 1.8-4, and more preferably 2-3.5, and the molar ratio of total ammonia to total $CO_2$ in the solution in the final stage may be in the range 1-3, preferably 1.2-2.8, more preferably 1.5-2.5, and most preferably 1.6-2.

The gas-liquid contact form for the ammonium bicarbonate generating liquid may be preferably of spray type, packing type, and bubbling type, and the gas-liquid contact form for the decarbonization absorption liquid is preferably of spray type and packing type.

The temperature control may reduce the temperature of the solution through a cold source, and the solution may be in contact with the flue gas to reduce the temperature of the flue gas. For the cold source, a refrigerator may be used to prepare chilled water, and the chilled water may cool down the solution through a heat exchanger or a coil. The temperature of the ammonium bicarbonate generating liquid may be controlled to be in the range10-30°C, preferably 12-28°C, preferably 15-25°C, and most preferably 16-22°C. In the first stage, the temperature of the decarbonization absorption liquid may be higher than the temperature of the ammonium bicarbonate generating liquid. High solution temperature may be beneficial to reducing the investment in cooling equipment. The temperature of the decarbonization absorption liquids between the first stage and the final stage is usually higher than the temperature of the first stage decarbonization absorption liquid and the final-stage decarbonization absorption liquid. In the final stage, the temperature of the decarbonization absorption liquid may be lower than the temperature of the ammonium bicarbonate generating liquid, which may control ammonia escape. Preferably, the temperature of the ammonium bicarbonate generating circulating liquid may be controlled to be in the range 15°C to 25°C. In the first stage, the temperature of the decarbonization absorption circulating liquid may be higher than the temperature of the ammonium bicarbonate generating circulating liquid, and in the final stage, the temperature of the decarbonization absorption circulating liquid may be lower than the temperature of the ammonium bicarbonate generating circulating liquid.

The pH control may be achieved through addition of ammonia or solution replacement between stages.

Ammonia is mainly added to the decarbonization absorption liquid, and may be added into the decarbonization absorption liquid in multiple stages separately. No or little ammonia is added to the ammonium bicarbonate generating liquid, and the amount of ammonia added to the final-stage decarbonization absorption liquid may be lower than that of the previous stage or no ammonia is added. Preferably, ammonia is added to the first- and second-stage decarbonization absorption circulating liquids, and the amount of ammonia added to the second-stage decarbonization absorption circulating liquid may account for 80-50wt% (weight-percent) of the total amount of ammonia added, preferably 75-55wt%, more preferably 72% -57wt%, and most preferably 60-65wt%. No ammonia is added to the final-stage decarbonization absorption circulating liquid and ammonium bicarbonate generating circulating liquid. Through multi-stage addition of ammonia, it is beneficial to controlling the solution composition, adjusting the pH value of the solution, and controlling ammonia escape while ensuring the decarbonization absorption efficiency. No or little ammonia is added to the ammonium bicarbonate generating liquid to ensure the production of ammonium bicarbonate. The amount of ammonia added to the final-stage decarbonization absorption liquid may be lower than that of the previous stage or no ammonia is added, which may control ammonia escape.

Solution replacement may be conducted through pipe overflow or pump transportation to transport the solution of the previous stage to the next stage, which may control the solution composition and pH value. The pH value of the ammonium bicarbonate generating liquid may be lower than that of the decarbonization absorption liquid, and its content of ammonium bicarbonate may be greater than that of the decarbonization absorption liquid.

The pH value in the decarbonization absorption liquid may be ≥8.0, preferably ≥8.2, more preferably ≥8.5, and most preferably ≥9.0.

Pressure control may be achieved, for example, by providing control valves or liquid seals in the ammonia-based decarbonization system. A control valve or a liquid seal device may be provided on a gas pipe after the decarbonization absorption zone or after the ammonia escape control system to maintain the internal pressure of the system as required.

The ammonia-based decarbonization device may maintain normal pressure ± 50 kPa, preferably normal pressure ± 40 kPa, more preferably normal pressure ± 30 kPa, and most preferably normal pressure ± 25 kPa.

Provided is a device for staged absorption ammonia-based decarbonization, which may include a decarbonization system, an ammonia escape control system, an ammonium bicarbonate treatment system, an ammonia supply system, and a cooling system.

The decarbonization system may include zone control, including an ammonium bicarbonate generating zone and a decarbonization absorption zone, wherein the ammonium bicarbonate generating zone is provided with at least one stage of gas-liquid contactor, the decarbonization absorption zone is provided with at least two stages of gas-liquid contactors, and equipment/components that only allow gas to pass through are provided between the zones and stages.

One or more layers of demisters may be provided after the final stage of the decarbonization absorption zone, and no, one or more layers of demisters are provided in the remaining layers as required. The demister may be of baffle, ridge, packing and screen type, or combinations thereof.

The ammonia escape control system may include multi-stage washing circulation, and may be provided with at

least one layer of acidic solution washing.

The cooling system may be used to lower the temperature of the ammonium bicarbonate generating circulating liquid and the decarbonization absorption circulating liquid.

The ammonium bicarbonate treatment system may include ammonium bicarbonate crystallization equipment and solid-liquid separation equipment.

The $CO_2$ content in the process gas before decarbonization may be in the range 6-50 v% (volume-percent); preferably 8-40v%; and more preferably 10-30v%.

The $CO_2$ content in the gas after the staged absorption ammonia-based treatment may be in the range 0-10v%; preferably 0-8v%; and preferably 0-6v%.

Clean flue gas $SO_2$ may have ≤10 mg/$Nm^3$, preferably ≤5 mg/$Nm^3$, and more preferably ≤2 mg/$Nm^3$.

Clean flue gas ammonia escape may be ≤20 ppm, preferably 15 ppm, and more preferably 10 ppm.

$CO_2$ removal efficiency may be ≥60%, preferably ≥70%, and more preferably ≥80%.

The methods may include using an absorption circulating liquid containing ammonium salts to remove carbon dioxide from a gas. The methods may include limiting ammonia escape by applying controlled compositions of the circulating liquid to the gas at different stages. Each stage may have a controlled reaction condition.

The controlled compositions may be characterized by a molar ratio of total ammonia to total $CO_2$. The controlled compositions may include ammonium carbonate. The controlled compositions may include ammonium bicarbonate. The controlled compositions may include ammonium carbamate. The controlled compositions may include ammonia.

The methods may include cooling a flue gas. The methods may include, after the cooling, contacting the flue gas sequentially with an ammonium bicarbonate-generating circulating liquid. The methods may include, after the cooling, contacting the flue gas sequentially with a decarbonization absorption circulating liquid. The ammonium bicarbonate-generating liquid may be involved in at least one stage of gas-liquid contact. After the stage, a molar ratio of total ammonia to total $CO_2$ in the ammonium bicarbonate-generating liquid may be in the range 1-3. The decarbonization absorption liquid may be involved in at least two stages of gas-liquid contact. After a first of the stages, a molar ratio of total ammonia to total $CO_2$ in the decarbonization absorption liquid may be in the range 1.2-4. After a final stage of the stages, a molar ratio of total ammonia to total $CO_2$ in the decarbonization absorption liquid may be in the range 1-3. After any stage that occurs between the first stage and the final stage, a molar ratio of total ammonia to total $CO_2$ in the decarbonization absorption liquid may be in the range 1.5-4.5. The total ammonia may include ammonia and ammonium radicals. The total CO2 may include free CO2 and carbonized CO2.

The gas-liquid contact of the ammonium bicarbonate generating liquid may be of a spray type, a packing type, or a bubbling type. The gas-liquid contact of the decarbonization absorption liquid may be of a spray type or a packing type.

A pH value of the ammonium bicarbonate generating liquid may be lower than a pH value of the decarbonization absorption liquid. An ammonium bicarbonate content of the ammonium bicarbonate generating liquid may be greater than that of the decarbonization absorption liquid.

A pH value of the decarbonization absorption liquid may be greater than 8.0.

The methods may include adding to the ammonium bicarbonate generating liquid a first amount of ammonia. The methods may include adding to the decarbonization absorption liquid a second amount of ammonia that is more than the first amount. In the adding to the decarbonization absorption liquid, it may be that less ammonia is added to the decarbonization absorption liquid in the final stage than is that which is added to the decarbonization absorption liquid in a decarbonization stage before the final stage.

The adding to the decarbonization absorption liquid a second amount of ammonia may include distributing the second amount of ammonia only to multiple stages separately.

The contacting the flue gas with a decarbonization absorption circulating liquid may include performing the contacting at normal pressure ± 50 kPa.

The methods may include controlling the reaction condition. The reaction condition may include one or more of temperature, pH and pressure.

The methods may include contacting the flue gas sequentially with: an ammonium bicarbonate-generating circulating liquid; and a decarbonization absorption circulating liquid. The controlling may include using a cold source to reduce a temperature of the ammonium bicarbonate generating liquid. The controlling may include using a cold source to reduce a temperature of the decarbonization absorption liquid.

The controlling may include between stages adding ammonia or replacing liquid of the ammonium bicarbonate generating liquid to control pH of the ammonium bicarbonate generating liquid. The controlling may include between stages adding ammonia or replacing liquid of the decarbonization absorption liquid to control pH of the decarbonization absorption liquid. The controlling may include between stages maintaining normal pressure of the contacting of the flue gas with the decarbonization absorption liquid using a control valve or liquid seal, not a control valve. The contacting may reduce the temperature of the flue gas.

The methods may include maintaining a temperature of ammonium bicarbonate generating liquid in the range 10-30°C;

The methods may include, in a first stage of contacting the gas with decarbonization absorption liquid, maintaining the decarbonization absorption liquid at a temperature that is higher than a temperature of ammonium bicarbonate generating liquid. The methods may include, in a final stage of contacting the gas with decarbonization absorption liquid. The methods may include maintaining the decarbonization absorption liquid at a temperature that is higher than the temperature of ammonium bicarbonate generating liquid.

The methods may include releasing the gas in a state in which the gas has an $SO_2$ concentration that is ≤10 mg/Nm$^3$. The methods may include releasing the gas in a state in which ammonia escape is ≤20 ppm.

The $CO_2$ may be removed at a $CO_2$ removal efficiency that is ≥60%.

A $CO_2$ content in the process gas before decarbonization may be in the range 6-50 v% (volume percent). A $CO_2$ content in the gas after treatment may be in the range 0- 10v%.

The methods may include receiving the gas from an ammonia-based desulfurization process.

The apparatus may include apparatus for staged absorption ammonia-based decarbonization.

The apparatus may include a decarbonization system. The apparatus may include an ammonia escape control system. The apparatus may include an ammonium bicarbonate treatment system. The apparatus may include an ammonia supply system. The apparatus may include a cooling system.

The decarbonization system may include an ammonium bicarbonate generating zone. The decarbonization system may include a decarbonization absorption zone. The ammonium bicarbonate generating zone may include at least one stage of gas-liquid contact. The decarbonization absorption zone may include at least two stages of gas-liquid contact.

Components allowing only gas to pass through may be disposed between the zones. Components allowing only gas to pass through may be disposed between the stages.

The apparatus may include one or more layers of demisters after a final stage of the decarbonization absorption zone. The apparatus may include at least one layer of acidic solution washing.

The ammonia escape control system may include multi-stage washing cycle control. The cooling system may be configured to reduce a temperature of the ammonium bicarbonate generating liquid. The cooling system may be configured to reduce a temperature of the decarbonization absorption liquid. The ammonium bicarbonate treatment system may include ammonium bicarbonate crystallization equipment. The ammonium bicarbonate treatment system may include solid-liquid separation equipment.

The gas to be treated in the method of the present invention is any suitable gas, preferably the process gas after ammonia-based desulfurization.

The $CO_2$ content in the gas is significantly reduced by the staged absorption ammonia method of the present invention. Specifically, the $CO_2$ content in the process gas before decarbonization is 6-50v%; preferably 8-40v%; and more preferably 10-30v%.

The $CO_2$ content in the gas after the staged absorption ammonia-based treatment of the present invention is 0-10v%; preferably 0-8v%; and preferably 0-6v%.

A method for staged absorption ammonia-based decarbonization protected by the present invention is preferably carried out in a device for staged absorption ammonia-based decarbonization defined by the present invention.

The beneficial effects of the invention are mainly reflected in decarbonization efficiency, ammonia escape, and production of ammonium bicarbonate fertilizer (abbreviated as ammonium bicarbonate). The decarbonization efficiency achieved by the method according to the invention is at least 60%, preferably at least 70%, and more preferably at least 80%. After decarbonization, the ammonia escape is smaller (800-5000 ppm), which can reduce the load of the ammonia escape control system, thereby reducing investment costs and operating costs. The ammonia escape after passing through the ammonia escape control system is ≤20 ppm, preferably 15 ppm, and more preferably 10 ppm. The solid content of ammonium bicarbonate in the ammonium bicarbonate generating zone is greater than 2wt%, preferably greater than 5wt%, and more preferably greater than 8wt%. Meanwhile, the decarbonization device can partially absorb pollutant $SO_2$ to obtain a lower $SO_2$ concentration of less than 10 mg/Nm$^3$, preferably less than 5 mg/Nm$^3$, and more preferably less than 2 mg/Nm$^3$.

$$\text{Decarbonization efficiency} = (Q1*w1-Q2*w2)/(Q1*w1)*100\%$$

Q1 is the flow rate of dry flue gas under the standard state at the inlet of the decarbonization device, m$^3$/h; w1 is the volume fraction of carbon dioxide in the flue gas at the inlet of the decarbonization device measured by the instrument, %; Q2 is the flow rate of dry flue gas under the standard state at the outlet of the decarbonization device, m$^3$/h; and w1 is the volume fraction of carbon dioxide in the flue gas at the outlet of the decarbonization device measured by the instrument, %.

$SO_2$ content in the gas may be tested according to HJ629-2011 Fixed Pollution Source Waste Gas - Determination of Sulfur Dioxide - Non-dispersive Infrared Absorption Method; the $CO_2$ content may be tested according to HJ 870-2017 Fixed Pollution Source Waste Gas - Determination of Carbon Dioxide - Non-dispersive Infrared Absorption Method; and $NH_3$ content may be tested according to HJ 533-2009 Determination of Ammonia in Ambient Air and Waste Gas - Nessler's Reagent Spectrophotometry.

Illustrative embodiments of apparatus and methods in accordance with the principles of the invention will now be described with reference to the accompanying drawings, which form a part hereof. It is to be understood that other embodiments may be utilized and that structural, functional and procedural modifications, additions or omissions may be made, and features of illustrative embodiments, whether apparatus or method, may be combined, without departing from the scope and spirit of the present invention.

The apparatus and methods may be include illustrative Example 1 and Comparative Examples 1 and 2 further illustrate the apparatus and the method and device for staged absorption ammonia-based decarbonization of the present invention.

Fig. 1 shows an example.

EXAMPLE 1

Process gas 1 after ammonia-based desulfurization enters ammonium bicarbonate generating zone 2, and the solution is cooled down through ammonium bicarbonate generating zone circulating pump 3 and ammonium bicarbonate generating zone heat exchanger 4, and reacts with the flue gas to form ammonium bicarbonate. The ammonium bicarbonate solution/slurry is pumped into crystallizer 27 through ammonium bicarbonate discharge pump 26, and then passes through solid-liquid separation equipment 28 and packing machine 29 to obtain solid ammonium bicarbonate 30.

The gas further enters decarbonization absorption zone 6, which includes first-stage decarbonization absorption zone 7, second-stage decarbonization absorption zone 9, and third-stage decarbonization absorption zone 11 from bottom to top, and the zones are separated by liquid collectors. The liquid collector adopts a tray and gas cap structure, which allows the gas to pass through from bottom to top and collects the circulating liquid in the upper area. In the first-stage decarbonization absorption zone 7, the circulating liquid is cooled down through first-stage decarbonization absorption zone circulating pump 12 and first-stage decarbonization absorption zone heat exchanger 13, and contacts with the flue gas to absorb carbon dioxide, and part of the circulating liquid goes to the ammonium bicarbonate generating zone 2. The gas enters the second-stage decarbonization absorption zone 9 through liquid collector 8, and the circulating liquid is cooled down through second-stage decarbonization absorption zone circulating pump 14 and second-stage decarbonization absorption zone heat exchanger 15, and contacts with the flue gas to absorb carbon dioxide, and part of the circulating liquid goes to the first-stage decarbonization absorption zone 7. Ammonia 5 is fed into the first-stage decarbonization absorption zone 7 and the second-stage decarbonization absorption zone 9 through pipes. The gas enters the third-stage decarbonization absorption zone 11 through liquid collector 10, and the circulating liquid is cooled down through third-stage decarbonization absorption zone circulating pump 16 and third-stage decarbonization absorption zone heat exchanger 17, and contacts with the flue gas to absorb carbon dioxide, and part of the circulating liquid goes to the second-stage decarbonization absorption zone 9.

The gas continues to enter ammonia escape control system 18. The ammonia escape control system includes ammonia escape control system water washing zone 19 and ammonia escape control system acid washing zone 21 from bottom to top. The two zones are separated by a liquid collector. The liquid collector adopts a tray and gas cap structure, which allows the gas to pass through from bottom to top and collects the circulating liquid in the upper area. In the ammonia escape control system water washing zone 19, the circulating liquid is washed through circulating pump 22 in the ammonia escape control system water washing zone, and contacts with the flue gas to absorb free ammonia. The gas enters the ammonia escape control system acid washing zone 21 through liquid collector 20, circulating liquid 24 from the ammonia-based desulfurization system is used and contacts with the flue gas to absorb free ammonia, and the reacted solution (i.e., desulfurization circulating liquid) 23 returns to the desulfurization system. Flue gas after ammonia removal is discharged 25.

The temperature control reduces the temperature of the circulating liquid through a cold source, and the circulating liquid is in contact with the flue gas to reduce the temperature of the flue gas. For the cold source, a refrigerator is used to produce chilled water, and the chilled water cools down the circulating liquid through a plate heat exchanger. The circulating liquid is in spray contact with the flue gas to reduce the temperature of the flue gas. The temperature of the ammonium bicarbonate generating circulating liquid is controlled to be 20°C to 25°C, and preferably 22°C. In the first stage, the temperature of the decarbonization absorption circulating liquid is higher than the temperature of the ammonium bicarbonate generating circulating liquid, and in the final stage, the temperature of the decarbonization absorption circulating liquid is lower than the temperature of the ammonium bicarbonate generating circulating liquid.

The pH control is through addition of ammonia and solution replacement between stages.

Ammonia is added to the first-stage and second-stage decarbonization absorption circulating liquids, and the amount of ammonia added to the second-stage decarbonization absorption circulating liquid accounts for 80-50wt% of the total amount of ammonia added, preferably 60wt%. No ammonia is added to the third-stage decarbonization absorption circulating liquid and ammonium bicarbonate generating circulating liquid.

Solution replacement is conducted through pipe overflow to transport the previous stage of circulating liquid to the next stage, which can control the solution composition and pH value. The pH value of the ammonium bicarbonate

generating circulating liquid is lower than that of the decarbonization absorption circulating liquid, and the content of ammonium bicarbonate is greater than that of the decarbonization absorption circulating liquid.

In the decarbonization absorbing circulating liquid, the pH value is ≥8.0, preferably ≥8.2, more preferably ≥8.5, and most preferably ≥9.0.

The system operates under normal pressure (the actual pressure is slightly higher than the atmospheric pressure, and the specific pressure is shown in the table below), and no pressure control device is provided.

Among them, the solution composition and control conditions are shown in the following table:

| Item | Ammonium bicarbonate generating zone | First-stage decarbonization absorption zone | Second-stage decarbonization absorption zone | Third-stage decarbonization absorption zone |
|---|---|---|---|---|
| Molar ratio of ammonia to total $CO_2$ | 1.7 | 2.3 | 2.5 | 1.8 |
| Temperature (°C) | 22 | 25 | 26 | 20 |
| pH | 9.3 | 9.4 | 9.7 | 9.4 |
| Pressure Pa (gauge pressure) | 2000 | 1600 | 1300 | 1000 |

Ammonia decarbonization adopts 99.6% anhydrous ammonia as absorbent, and the parameters of process gas 1 are shown in Table 1 below:

Table 1.

| Serial number | Item | Value |
|---|---|---|
| 1 | Gas flow rate, $Nm^3/h$ | 78710 |
| 2 | Temperature, °C | 18 |
| 3 | $SO_2$ content, $mg/Nm^3$ | 35 |
| 4 | $CO_2$ content, v% | 13.5 |
| 5 | $H_2O$ content, v% | 2.5 |

The main parameters of the process gas after being treated in the decarbonization absorption zone 6 are shown in Table 2 below:

Table 2

| Serial number | Item | Value |
|---|---|---|
| 1 | Gas flow at the outlet of decarbonization tower, $Nm^3/h$ | 75333 |
| 2 | $CO_2$ content at the outlet of decarbonization tower, v% | 5.26 |
| 3 | $NH_3$ content at the outlet of decarbonization tower, ppm | 1000 |
| 4 | Decarbonization efficiency, % | 60 |
| 5 | Amount of by-product ammonium bicarbonate, t/h | 22.5 |
| 6 | 99.6% anhydrous ammonia consumption, t/h | 4.86 |

The main parameters of the process gas after being treated by the ammonia washer 18 are shown in the following table:

| Serial number | Item | Value |
|---|---|---|
| 1 | Gas flow rate at the outlet of ammonia washer, $Nm^3/h$ | 77754 |
| 2 | $CO_2$ content at the outlet of ammonia washer, v% | 5.26 |
| 3 | $NH_3$ content at the outlet of ammonia washer, ppm | 10 |

(continued)

| Serial number | Item | Value |
|---|---|---|
| 4 | $SO_2$ content at the outlet of ammonia washer, mg/Nm$^3$ | 5 |

COMPARATIVE EXAMPLE 1

Compared with Example 1, only the temperature control is different. The temperature control of the first- and second-stage decarbonization absorption zones is the same as that of the third stage, all being set at 20°C.

Because the temperature control of the first- and second-stage decarbonization absorption zones is relatively low, and the temperature difference relative to the cold source is reduced, the required heat exchange area of the heat exchanger 13 and the heat exchanger 14 increases, which increases equipment investment cost. Moreover, when the ambient temperature is 20°C, the cold sources of the first- and second-stage decarbonization absorption zone heat exchangers 13 and heat exchangers 15 in Example 1 can adopt cooling by air coolers using low-temperature ambient air to save operating costs. In Comparative Example 1, since the ambient temperature is the same as the target temperature and both are set to be 20°C, it is impossible to achieve cooling with an air cooler, and only chilled water with high energy consumption can be used for cooling.

Comparative EXAMPLE 2

Comparative Example 2, compared to Example 1, is only different in the addition of ammonia. Ammonia is added to the ammonium bicarbonate generating zone and the first, second and third decarbonization absorption zones at equivalent amounts.

Because the amount of ammonia added in the ammonium bicarbonate generating zone reaches 25wt%, ammonium bicarbonate cannot be generated in the solution, and ammonium bicarbonate crystals cannot be obtained. The amount of ammonia added in the third-stage decarbonization absorption zone reaches 25wt%, which leads to a large increase in decarbonization ammonia escape, and the ammonia escape of the process gas after treatment in the decarbonization absorption zone 6 reaches 6000 ppm.

As can be seen from the comparison of the example of the present invention and comparative examples as described above, through the staged solution composition control and reaction condition control by the processing with the method and device of the present invention, it is possible to achieve efficient decarbonization while controlling ammonia escape, thereby achieving excellent technical effects and economic effects.

OTHER ILLUSTRATIVE EMBODIMENTS

1. A method for staged absorption ammonia-based decarbonization, wherein an absorption circulating liquid containing ammonium salts is used to remove carbon dioxide in a gas, and ammonia escape is controlled while realizing efficient decarbonization through staged solution composition control and reaction condition control.
2. The method of embodiment 1, wherein the staged solution composition control is characterized by the molar ratio of total ammonia to total $CO_2$, and the solution composition comprises ammonium carbonate, ammonium bicarbonate, ammonium carbamate, ammonia or combinations thereof.
3. The method of embodiment 1, wherein the reaction condition control comprises temperature control, pH control, and pressure control.
4. The method of embodiment 2, wherein the cooled flue gas is sequentially contacted with an ammonium bicarbonate generating circulating liquid and a decarbonization absorption circulating liquid to realize the synergistic control of ammonium bicarbonate generation, ammonium bicarbonate crystallization, carbon dioxide absorption, and ammonia escape, wherein

    the ammonium bicarbonate generating liquid is provided with at least one stage of gas-liquid contact, the molar ratio of total ammonia to total $CO_2$ in the solution is 1-3, preferably 1-2; the total ammonia comprises ammonia and ammonium radicals; and the total $CO_2$ comprises free $CO_2$ and carbonized $CO_2$; and
    the decarbonization absorption liquid is provided with at least two stages of gas-liquid contact, the molar ratio of total ammonia to total $CO_2$ in the first-stage solution is 1.2-4, preferably 1.4-3.5, more preferably 1.6-3, and most preferably 1.8-2.5, the molar ratio of total ammonia to total $CO_2$ in the solutions between the first stage and the final stage is 1.5-4.5, preferably 1.8-4, and more preferably 2-3.5, and the molar ratio of total ammonia to total $CO_2$

in the final-stage solution is 1-3 , preferably 1.2-2.8, more preferably 1.5-2.5, and most preferably 1.6-2.

5. The method of embodiment 4, wherein the gas-liquid contact form for the ammonium bicarbonate generating liquid is preferably of spray type, packing type, and bubbling type, and the gas-liquid contact form for the decarbonization absorption liquid is preferably of spray type and packing type.
5. The method of embodiment 4, wherein the pH value of the ammonium bicarbonate generating liquid is lower than that of the decarbonization absorption liquid, and its content of ammonium bicarbonate is greater than that of the decarbonization absorption liquid.
6. The method of embodiment 4, wherein the pH value of the decarbonization absorption liquid is greater than 8.0, preferably ≥8.2, more preferably ≥8.5, and most preferably ≥9.0.
7. The method of embodiment 4, wherein ammonia is mainly added to the decarbonization absorption liquid, no or little ammonia is added to the ammonium bicarbonate generating liquid, and the amount of ammonia added to the final-stage decarbonization absorption liquid is lower than that of the previous stage or no ammonia is added.
8. The method of embodiment 7, wherein ammonia is added into the decarbonization absorption liquid in multiple stages separately.
9. The method of embodiment 3, wherein the temperature of the ammonium bicarbonate generating liquid is 10-30°C, preferably 12-28°C, preferably 15-25°C, and most preferably 16-22°C; in the first stage, the temperature of the decarbonization absorption liquid is higher than the temperature of the ammonium bicarbonate generating liquid, and in the final stage, the temperature of the decarbonization absorption liquid is lower than the temperature of the ammonium bicarbonate generating liquid.
10. The method of embodiment 4, wherein the ammonia-based decarbonization device maintains normal pressure ± 50 kPa, preferably normal pressure ± 40 kPa, more preferably normal pressure ± 30 kPa, and most preferably normal pressure ± 25 kPa.
11. The method of embodiment 1, wherein the clean flue gas $SO_2$ is ≤10 mg/$Nm^3$, preferably ≤5 mg/$Nm^3$, and more preferably less than 2 mg/$Nm^3$.
12. The method of embodiment 1, wherein the clean flue gas ammonia escape is ≤20 ppm, preferably 15 ppm, and more preferably 10 ppm.
13. The method of embodiment 1, wherein the $CO_2$ removal efficiency is ≥60%, and preferably ≥80%.
14. A device for staged absorption ammonia-based decarbonization, including a decarbonization system, an ammonia escape control system, an ammonium bicarbonate treatment system, an ammonia supply system, and a cooling system.
15. The device of embodiment 14, wherein the decarbonization system adopts zone control, including an ammonium bicarbonate generating zone and a decarbonization absorption zone, the ammonium bicarbonate generating zone is provided with at least one stage of gas-liquid contact, the decarbonization absorption zone is provided with at least two stages of gas-liquid contact, and equipment/components that only allow gas to pass through are provided between the zones and stages.
16. The device of embodiment 14, wherein one or more layers of demisters are provided after the final stage of the decarbonization absorption zone, and no, one or more layers of demisters are provided in the remaining layers as required, and the demister is of baffle, ridge, packing and screen type, or combinations thereof.
17. The device of embodiment 14, wherein the ammonia escape control system adopts multi-stage washing cycle control, and at least one layer of acidic solution washing is provided.
18. The device of embodiment 14, wherein the cooling system is used to reduce the temperature of the ammonium bicarbonate generating liquid and the decarbonization absorption liquid.
19. The device of embodiment 14, wherein the ammonium bicarbonate treatment system includes ammonium bicarbonate crystallization equipment and solid-liquid separation equipment.
20. The method of embodiment 3, wherein the flue gas is sequentially contacted with the ammonium bicarbonate generating liquid and the decarbonization absorption liquid to realize the synergistic control of ammonium bicarbonate generation, ammonium bicarbonate crystallization, carbon dioxide absorption, and ammonia escape, wherein

the temperature control reduces the temperature of the ammonium bicarbonate generating liquid and the decarbonization absorption liquid through a cold source, and the ammonium bicarbonate generating liquid and the decarbonization absorption liquid contact with the flue gas to reduce the temperature of the flue gas,
the pH control is achieved through addition of ammonia or solution replacement between stages, and the pressure control is achieved by providing control valves or liquid seals in the ammonia-based decarbonization system and the like means, and no pressure control device is provided for normal pressure operation.

21. The method of embodiment 1, wherein the $CO_2$ content in the process gas before decarbonization is 6-50v%; preferably 8-40v%; more preferably 10-30v%; the $CO_2$ content in the gas after treatment is 0- 10v%; preferably 0-8v%;

preferably 0-6v%.

22. The method of embodiment 1, wherein the gas is a process gas after ammonia-based desulfurization.

All ranges and parameters disclosed herein shall be understood to encompass any and all subranges subsumed therein, every number between the endpoints, and the endpoints. For example, a stated range of "1 to 10" should be considered to include any and all subranges between (and inclusive of) the minimum value of 1 and the maximum value of 10; that is, all subranges beginning with a minimum value of 1 or more (e.g. 1 to 6.1), and ending with a maximum value of 10 or less (e.g., 2.3 to 9.4, 3 to 8, 4 to 7), and finally to each number 1, 2, 3, 4, 5, 6, 7, 8, 9, and 10 contained within the range.

Thus, apparatus and methods for staged absorption ammonia-based decarbonization have been provided. Persons skilled in the art will appreciate that the present invention may be practiced by other than the described embodiments, which are presented for purposes of illustration rather than of limitation. The present invention is limited only by the claims that follow.

## Claims

**1.** A method for staged absorption ammonia-based decarbonization, wherein an absorption circulating liquid containing ammonium salts is used to remove carbon dioxide in a gas, and ammonia escape is controlled while realizing efficient decarbonization through staged solution composition control and reaction condition control.

**2.** The method of claim 1, wherein the staged solution composition control is **characterized by** the molar ratio of total ammonia to total $CO_2$, and the solution composition comprises ammonium carbonate, ammonium bicarbonate, ammonium carbamate, ammonia or combinations thereof.

**3.** The method of claim 1, wherein the reaction condition control comprises temperature control, pH control, and pressure control.

**4.** The method of claim 2, wherein the cooled flue gas is sequentially contacted with an ammonium bicarbonate generating circulating liquid and a decarbonization absorption circulating liquid to realize the synergistic control of ammonium bicarbonate generation, ammonium bicarbonate crystallization, carbon dioxide absorption, and ammonia escape, wherein the ammonium bicarbonate generating liquid is provided with at least one stage of gas-liquid contact, the molar ratio of total ammonia to total $CO_2$ in the solution is 1-3, preferably 1-2; the total ammonia comprises ammonia and ammonium radicals; and the total $CO_2$ comprises free $CO_2$ and carbonized $CO_2$; and
the decarbonization absorption liquid is provided with at least two stages of gas-liquid contact, the molar ratio of total ammonia to total $CO_2$ in the first-stage solution is 1.2-4, preferably 1.4-3.5, more preferably 1.6-3, and most preferably 1.8-2.5, the molar ratio of total ammonia to total $CO_2$ in the solutions between the first stage and the final stage is 1.5-4.5, preferably 1.8-4, and more preferably 2-3.5, and the molar ratio of total ammonia to total $CO_2$ in the final-stage solution is 1-3 , preferably 1.2-2.8, more preferably 1.5-2.5, and most preferably 1.6-2.

**5.** The method of claim 4, wherein the gas-liquid contact form for the ammonium bicarbonate generating liquid is preferably of spray type, packing type, and bubbling type, and the gas-liquid contact form for the decarbonization absorption liquid is preferably of spray type and packing type.

**6.** The method of claim 4, wherein the pH value of the decarbonization absorption liquid is greater than 8.0, preferably ≥8.2, more preferably ≥8.5, and most preferably ≥9.0.

**7.** The method of claim 4, wherein ammonia is mainly added to the decarbonization absorption liquid, no or little ammonia is added to the ammonium bicarbonate generating liquid, and the amount of ammonia added to the final-stage decarbonization absorption liquid is lower than that of the previous stage or no ammonia is added.

**8.** The method of claim 7, wherein ammonia is added into the decarbonization absorption liquid in multiple stages separately.

**9.** The method of claim 3, wherein the temperature of the ammonium bicarbonate generating liquid is 10-30°C, preferably 12-28°C, preferably 15-25°C, and most preferably 16-22°C; in the first stage, the temperature of the decarbonization absorption liquid is higher than the temperature of the ammonium bicarbonate generating liquid, and in the final stage, the temperature of the decarbonization absorption liquid is lower than the temperature of the ammonium bicarbonate generating liquid.

**10.** The method of claim 4, wherein the ammonia-based decarbonization device maintains normal pressure ± 50 kPa, preferably normal pressure ± 40 kPa, more preferably normal pressure ± 30 kPa, and most preferably normal pressure ± 25 kPa.

**11.** The method of claim 1, wherein the clean flue gas $SO_2$ is ≤10 $mg/Nm^3$, preferably ≤5 $mg/Nm^3$, and more preferably less than 2 $mg/Nm^3$.

**12.** The method of claim 1, wherein the clean flue gas ammonia escape is ≤20 ppm, preferably 15 ppm, and more preferably 10 ppm.

**13.** The method of claim 1, wherein the $CO_2$ removal efficiency is ≥60%, and preferably ≥80%.

**14.** A device for staged absorption ammonia-based decarbonization, including a decarbonization system, an ammonia escape control system, an ammonium bicarbonate treatment system, an ammonia supply system, and a cooling system.

**15.** The device of claim 14, wherein the decarbonization system adopts zone control, including an ammonium bicarbonate generating zone and a decarbonization absorption zone, the ammonium bicarbonate generating zone is provided with at least one stage of gas-liquid contact, the decarbonization absorption zone is provided with at least two stages of gas-liquid contact, and equipment/components that only allow gas to pass through are provided between the zones and stages.

**16.** The device of claim 14, wherein one or more layers of demisters are provided after the final stage of the decarbonization absorption zone, and no, one or more layers of demisters are provided in the remaining layers as required, and the demister is of baffle, ridge, packing and screen type, or combinations thereof.

**17.** The device of claim 14, wherein the ammonia escape control system adopts multi-stage washing cycle control, and at least one layer of acidic solution washing is provided.

**18.** The device of claim 14, wherein the cooling system is used to reduce the temperature of the ammonium bicarbonate generating liquid and the decarbonization absorption liquid.

**19.** The device of claim 14, wherein the ammonium bicarbonate treatment system includes ammonium bicarbonate crystallization equipment and solid-liquid separation equipment.

**20.** The method of claim 3, wherein the flue gas is sequentially contacted with the ammonium bicarbonate generating liquid and the decarbonization absorption liquid to realize the synergistic control of ammonium bicarbonate generation, ammonium bicarbonate crystallization, carbon dioxide absorption, and ammonia escape, wherein

the temperature control reduces the temperature of the ammonium bicarbonate generating liquid and the decarbonization absorption liquid through a cold source, and the ammonium bicarbonate generating liquid and the decarbonization absorption liquid contact with the flue gas to reduce the temperature of the flue gas,
the pH control is achieved through addition of ammonia or solution replacement between stages, and
the pressure control is achieved by providing control valves or liquid seals in the ammonia-based decarbonization system and the like means, and no pressure control device is provided for normal pressure operation.

**21.** The method of claim 1, wherein the $CO_2$ content in the process gas before decarbonization is 6-50v%; preferably 8-40v%; more preferably 10-30v%; the $CO_2$ content in the gas after treatment is 0- 10v%; preferably 0-8v%; preferably 0-6v%.

**22.** The method of claim 1, wherein the gas is a process gas after ammonia-based desulfurization.

**23.** The method of claim 4, wherein the pH value of the ammonium bicarbonate generating liquid is lower than that of the decarbonization absorption liquid, and its content of ammonium bicarbonate is greater than that of the decarbonization absorption liquid.

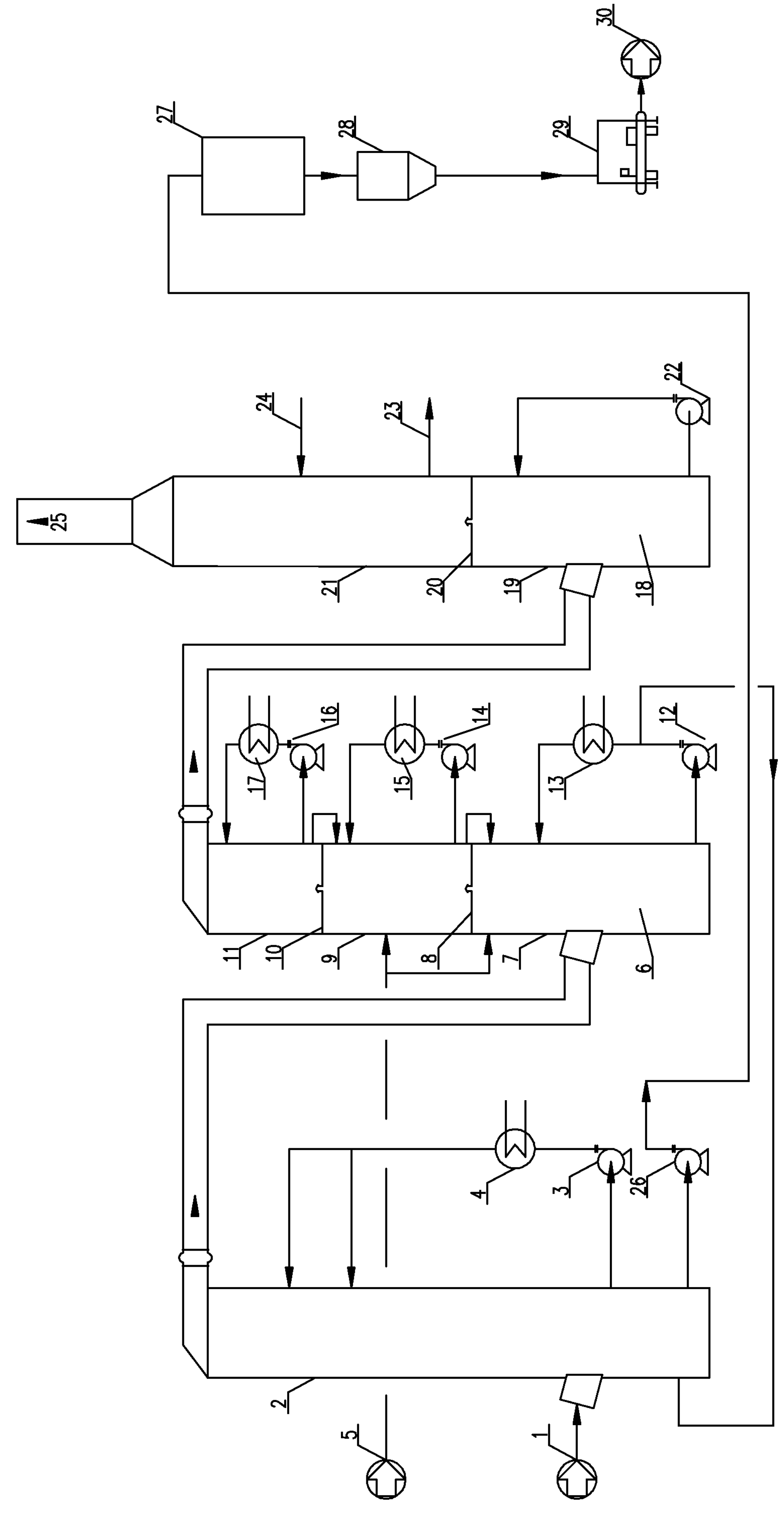
1
2
3
4
5
6
7
8
9
10
11
12
13
14
15
16
17
18
19
20
21
22
23
24
25
26
27
28
29
30

Fig. 1

## INTERNATIONAL SEARCH REPORT

International application No.
**PCT/CN2023/083689**

**A. CLASSIFICATION OF SUBJECT MATTER**

B01D53/62(2006.01)i; B01D53/78(2006.01)i

According to International Patent Classification (IPC) or to both national classification and IPC

**B. FIELDS SEARCHED**

Minimum documentation searched (classification system followed by classification symbols)

IPC: B01D

Documentation searched other than minimum documentation to the extent that such documents are included in the fields searched

Electronic data base consulted during the international search (name of data base and, where practicable, search terms used)

DWPI, CNABS, CNTXT, CNKI: 二氧化碳, 脱碳, 吸收, 氨, 碳酸氢铵, 碳酸铵, 氨基甲基铵, 摩尔比, 温度, carbon dioxide, decarburization, absorption, ammonia, ammonium bicarbonate, ammonium carbonate, aminomethylammonium, molar ratios, temperature

**C. DOCUMENTS CONSIDERED TO BE RELEVANT**

| Category* | Citation of document, with indication, where appropriate, of the relevant passages | Relevant to claim No. |
|---|---|---|
| PX | CN 115105939 A (JIANGSU NEW CENTURY JIANGNAN ENVIRONMENTAL PROTECTION CO., LTD. et al.) 27 September 2022 (2022-09-27)<br>paragraphs 47-73 | 1-23 |
| X | CN 101909720 A (ALSTOM TECHNOLOGY LTD.) 08 December 2010 (2010-12-08)<br>description, paragraphs 36-60, and figures 2A-2C | 1-23 |
| X | CN 103889548 A (ALSTOM TECHNOLOGY LTD.) 25 June 2014 (2014-06-25)<br>description, paragraphs 30-82, and figures 1 and 2 | 1-23 |
| A | CN 113262625 A (JIANGSU NEW CENTURY JIANGNAN ENVIRONMENTAL PROTECTION CO., LTD.) 17 August 2021 (2021-08-17)<br>entire document | 1-23 |
| A | CN 101229475 A (WUHAN KAIDI ELECTRIC POWER ENVIRONMENTAL PROTECTION CO., LTD.) 30 July 2008 (2008-07-30)<br>entire document | 1-23 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **26 June 2023** | **30 June 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2023/083689**

| C. DOCUMENTS CONSIDERED TO BE RELEVANT | | |
|---|---|---|
| Category* | Citation of document, with indication, where appropriate, of the relevant passages | Relevant to claim No. |
| A | GB 445319 A (RALPH HARPER MCKEE; ERNEST ALBERT WINTER;) 07 April 1936 (1936-04-07)<br>entire document | 1-23 |

Form PCT/ISA/210 (second sheet) (July 2022)

**INTERNATIONAL SEARCH REPORT**
**Information on patent family members**

International application No.
**PCT/CN2023/083689**

| Patent document cited in search report | | | Publication date (day/month/year) | Patent family member(s) | | | Publication date (day/month/year) |
|---|---|---|---|---|---|---|---|
| CN | 115105939 | A | 27 September 2022 | None | | | |
| CN | 101909720 | A | 08 December 2010 | ZA | 201002803 | B | 27 July 2011 |
| | | | | EP | 2203240 | A1 | 07 July 2010 |
| | | | | EP | 2203240 | B1 | 08 August 2012 |
| | | | | RU | 2010120716 | A | 27 November 2011 |
| | | | | DK | 2203240 | T3 | 29 October 2012 |
| | | | | PL | 2203240 | T3 | 31 December 2012 |
| | | | | AU | 2008316968 | A1 | 30 April 2009 |
| | | | | AU | 2008316968 | B2 | 22 December 2011 |
| | | | | WO | 2009055419 | A1 | 30 April 2009 |
| | | | | CA | 2703208 | A1 | 30 April 2009 |
| | | | | CA | 2703208 | C | 19 February 2013 |
| | | | | KR | 20100072359 | A | 30 June 2010 |
| | | | | KR | 101216579 | B1 | 31 December 2012 |
| | | | | BRPI | 0819214 | A2 | 05 May 2015 |
| | | | | US | 2009101012 | A1 | 23 April 2009 |
| | | | | US | 8182577 | B2 | 22 May 2012 |
| | | | | JP | 2011500326 | A | 06 January 2011 |
| | | | | MX | 2010004301 | A | 20 May 2010 |
| | | | | IL | 205191 | A0 | 30 December 2010 |
| | | | | IL | 205191 | A | 31 October 2013 |
| CN | 103889548 | A | 25 June 2014 | EP | 2564915 | A1 | 06 March 2013 |
| | | | | EP | 2564915 | B1 | 12 October 2016 |
| | | | | US | 2014178276 | A1 | 26 June 2014 |
| | | | | WO | 2013030650 | A1 | 07 March 2013 |
| | | | | AU | 2012300552 | A1 | 20 March 2014 |
| | | | | AU | 2012300552 | B2 | 14 January 2016 |
| | | | | CA | 2847039 | A1 | 07 March 2013 |
| | | | | CA | 2847039 | C | 30 May 2017 |
| CN | 113262625 | A | 17 August 2021 | None | | | |
| CN | 101229475 | A | 30 July 2008 | None | | | |
| GB | 445319 | A | 07 April 1936 | US | 2043109 | A | 02 June 1936 |
| | | | | FR | 799474 | A | 13 June 1936 |
| | | | | BE | 414069 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202210553874
- CN 108144428 A
- CN 101524621 B
- CN 200880122376